# EUROPEAN PATENT SPECIFICATION

(11) **EP 1 039 769 B1**
(45) Date of publication and mention of the grant of the patent: **09.05.2012**
(21) Application number: 99105895.9
(22) Date of filing: 24.03.1999
(51) Int. Cl.: H04M 1/66, H04W 12/06, H04W 88/02, H04M 1/725, H04L 29/06

(54) **A method and apparatus for getting acccess to a digital mobile phone**
Verfahren und Vorrichtung um auf ein digitales mobiles Telefon zugreifen zu können
Méthode et appareil à accéder un téléphone de mobile digitale

(43) Date of publication of application: 27.09.2000
(73) Proprietor: Hewlett-Packard Development Company, L.P., Houston, TX 77707 (US)
(72) Inventor: Pedersen,Karsten Aarrebo, DK-9320 Aalborg (DK)
(74) Representative: W.P. Thompson & Co.

(56) References cited:
- WO-A-98/16906
- GB-A- 2 258 974
- US-A- 4 993 068
- M. Lapère, E. Johnson: "User Authentification in mobile Telecommunication Environments using Voice Biometrics and Smartcards" Proceedings of: Technology for Cooperative Competition. 4th Int. Conf. on Intelligence in Services and Networks. Cernobbio, Italy, 27-29 May 97 XP002106691

## Description

### BACKGROUND OF THE INVENTION

The present invention relates to a method and apparatus for getting access to a digital mobile phone.

Although applicable to any digital mobile system, the present invention and its underlying problems will be discussed with particular reference to GSM mobile systems.

M. Lapère, E. Johnson: "User Authentication in mobile Telecommunication Environments using Voice Biometrics and Smartcards" Proceedings of: Technology for Cooperative Competition. 4th Int. Conf. on Intelligence in Services and Networks. Cernobbio, Italy, 27-29 May 97 relates to a method of biometric authentication for mobile communication systems. ,

In current GSM mobile phones, a PIN (Personal Identification) code can be used for getting access to the SIM (Subscriber Identification Module) card and thereby to the network. This helps to protect against unauthorized use of the mobile phones.

In general, a user does not like to have the same code for his or her mobile phone as used f.e. for credit cards, alarms or other secured systems. This is due to the fact that, if an unauthorized person sees the code being entered, he or she will have access to every secured system.

Thus, a disadvantage arises from the necessity to have a variety of different PIN codes for different secured systems.

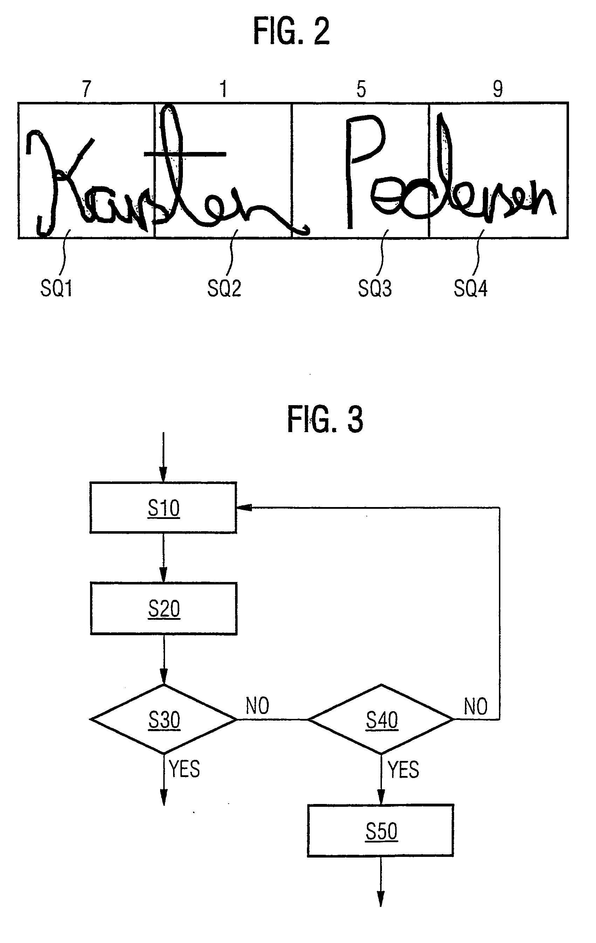

Fig. 3 shows a flowchart for illustrating the usual procedure for getting access to a GSM mobile phone. A description of the current function of the PIN code may be found in GSM specification 11.11 (6.1.0). Section 8.9 specifically contains the procedure for entering the PIN code.

In step S10, the user is asked to enter his or her PIN code by showing a corresponding display message. Then, the user pushes four keys in order to enter the code. In step S20, the PIN code is sent to the SIM card, f.e. by pressing the OK button. In step S30, the entered PIN code is compared to a corresponding code stored in the SIM card. If both codes match, access is confirmed. If there is a mismatch, in step S40 it is determined, if the number of tries equals a predetermined number, f.e. 3. If this is the case, the access is denied and the user is asked to enter his or her PUK code. If the number of tries is less than the predetermined number in step S40, the user is allowed to go back to step S10 and asked again to enter his or her correct PIN code.

### SUMMARY OF THE INVENTION

The present invention provides a method and apparatus for getting access to a digital mobile phone according to claim 1 and 4, respectively.

A particular advantage is that no more new code has to be remembered by the user. Instead of keying in a PIN code, the user simply enters his or her signature.

In addition, it does not matter if a bypasser can identify the entered signature or not, because another person will not be able to reproduce it as it would be possible with a PIN code.

The principal idea of the present invention is to apply the hand written signature recognition technique for getting access to a digital mobile phone. When the signature has been correctly validated, the mobile phone will be unlokked. In this respect, signature is not restricted to the personal name, but can be any hand written text and/or number string.

At the same time, the signature recognition could advantageously be used for enabling other secure parts of the device, i.e. calendar, email, and and general personal information or settings.

Preferred embodiments of the present invention are listed in the dependent claims.

According to a preferred embodiment, there is provided a method for getting access to a digital mobile phone comprising the steps of:
entering a signature in a signature recognition means having a stored reference signature;
comparing the entered signature and the stored reference signature;
if there is a match between the entered signature and the stored reference signature, the entered signature is internally converted to a PIN code and the PIN code is sent to the SIM card;
comparing the PIN code with a reference code stored in the SIM card and
if there is a match, confirming the access; or
if there is a mismatch, denying the access.

According to a preferred embodiment, there is provided an apparatus for getting access to a digital mobile phone comprising:
a signature recognition means having a stored reference signature;
an entering means for entering a signature;
a comparing means for comparing the entered signature and the stored reference signature, the entered signature is internally converted to a PIN code using a conversion means and the PIN code is sent to the SIM card;
means for comparing the PIN code with a reference code stored on a SIM card;
means for reading a PIN code from memory to a SIM card if there is a match between the entered signature and the stored reference signature; and an access means for confirming the access, if there is a match, and for denying the access, if there is a mismatch.

According to a further preferred embodiment, a conversion means for converting the entered signature in a PIN code by a conversion means and sending the PIN code to the SIM card; and a comparison means for comparing the converted PIN code with a reference code stored in the SIM card are provided.

According to a further preferred embodiment, said conversion means includes a touch screen. Thus, the procedure can be implemented in a mobile device which already has a touch screen, using a software approach.

According to a further preferred embodiment, said touch screen has a plurality of fields each being associated with a part of the signature.

According to a further preferred embodiment, the fields are automatically generatable, after the signature has been entered.

According to a further preferred embodiment, a conversion means for converting each matched field to a respective digit of a PIN code; and an entering means for entering said PIN code to a SIM card are provided.

According to a further preferred embodiment, a detecting means for detecting a pressure pattern of the entered signature; and a comparison means for comparing the detected pressure pattern of the entered signature and a stored reference pressure pattern are provided.

### BRIEF DESCRIPTION OF THE DRAWINGS

The present invention will become more fully understood by the following detailed description of preferred embodiments thereof in conjunction with the accompaying drawings, in which:
Fig. 1 a flowchart for illustrating the procedure for getting access to a GSM mobile phone according to an embodiment of the invention;
Fig. 2 a schematic illustration for explaining an embodiment of the signature recognition means; and
Fig. 3 a flowchart for illustrating the usual procedure for getting access to a GSM mobile phone.

### DESCRIPTION OF THE PREFERRED EMBODIMENTS

In the figures, the same reference signs denote the same or equivalent parts.

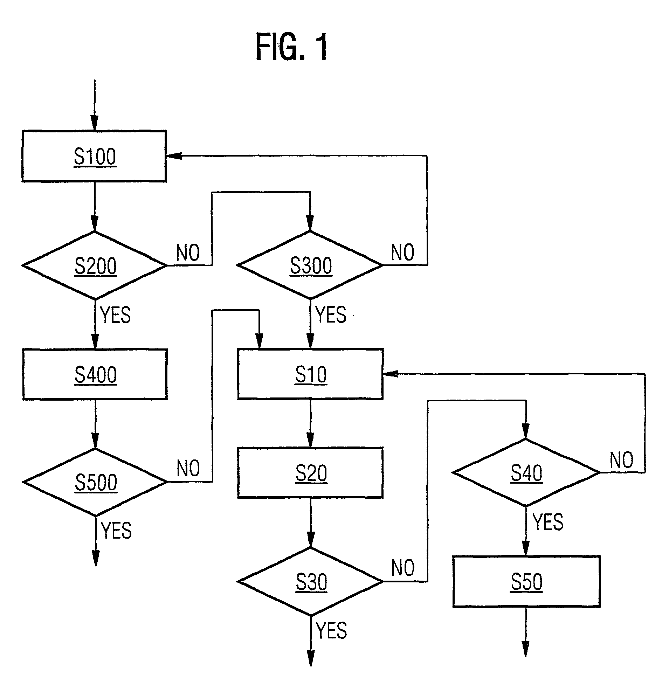

Fig. 1 shows a flowchart for illustrating the procedure for getting access to a GSM mobile phone according to an embodiment of the invention.

In step S100, the user is asked to enter his or her signature by showing a corresponding display message. Then, the user writes the signature on a touch screen of the mobile phone, either with his finger or by means of a pencil. In step S200, it is checked if the signature is correct. This may be done by a usual pattern comparison technique.

If the signature is not correct, in step S300 it is determined, if the number of tries equals a predetermined number, f.e. 3. If the number of tries is less than the predetermined number in step S300, the user is allowed to go back to step S100 and asked again to enter his or her correct signature. If the number of tries equals the prdetermined number, the procedure proceeds to step S10 ff. explained above.

If the signature is correct in step S200, it is internally converted to a PIN code and the PIN code is sent to the SIM card. The conversion may be obtained by reading specific memory locations or by a more sophisticated conversion alogorithm.

In step S500, the entered PIN code is compared to a corresponding code stored in the SIM card. If both codes match, access is confirmed. If there is a mismatch, the procedure proceeds to step S10 ff. explained above.

In other words, if the signature recognition and conversion procedure fails for any reason, the the usual procedure for getting access to a GSM mobile phone is performed, namely steps S10 to S50 explained with respect to Fig. 3.

Fig. 2 is a schematic illustration for explaining an embodiment of the signature recognition means.

Due to a limitation in the GSM specification 02.17 v. 5.0.1 subsection 5.5, which prohibits storing of the PIN code in the mobile phone, a particular approach should be taken.

As shown in Fig. 2, the signature entered by the user on a touch screen is split into 4 or 8 or more squares, here SQ1-SQ4, which graphical contents represent a 1-digit value, respectively, such that all squares in combination represent the four-digit code, here "7159", if the entered signature corresponds to a stored reference signature.

Either a fixed frame with the squares SQ1-SQ4 may be provided, or the frame can be automatically formed on the screen after the signature has been entered anywhere on the screen. The latter solution has the advantage that the recognition is adaptable to the position and the magnitude of the signature.

If the comparison of the parts of the signature in the respective squares SQ1-SQ4 results in matches with corresponding reference parts, then for each square a stored digit of the PIN number is read from a memory.

The individual squares can also contain written numbers instead of a part of a signature.

Thus, this approach should not be in conflict with the above mentioned GSM specification 02.17 v. 5.0.1 & v. 5.1.0 (draft) subsection 5.5.

Although the present invention has been described with respect to preferred embodiments thereof, it should be understood that many modifications can be performed without departing from the scope of the invention as defined by the appended claims.

Particularly, to ensure even higher security, a technique using pressure as well as pattern and/or position can be chosen for the signature recognition means, f.e. the touch screen. This technique enables to detect pressure points which is unique for signatures.

Moreover, the access procedure can be more complex with additional queries, such as birth date, additional codes etc.

## Claims

1. A method for getting access to a digital mobile phone comprising the steps of:
entering a signature (11) in a signature recognition means having a stored reference signature;
comparing the entered signature and the stored reference signature (100);
if there is a match between the entered signature and the shrod reference signature, the entered signature is internally converted to a PIN code and the PIN code is sent to the SIM card;
comparing the PIN code with a reference code stored in the SIM card (500); and
if there is a match, confirming the access; or
if there is a mismatch, denying the access.

2. The method according to claim 1, further comprising the steps of:
detecting a pressure pattern of the entered signature; and
comparing the detected pressure pattern of the entered signature and a stored reference pressure pattern;
if there is a match, confirming the access; and
if there is a mismatch, denying the access.

3. The method according to one of the preceeding claims, comprising the steps of:
performing a PIN code access procedure, if the signature recognition and/or conversion fails.

4. An apparatus for getting access to a digital mobile phone comprising:
a signature recognition means (100) having a stored reference signature.;
an entering means for entering a signature;
a comparing means (200) for comparing the entered signature and the stored reference signature; the entered signature is internally converted to a PIN code and the PIN code is sent to the SIM card;
means for comparing the PIN code with a reference code stored on a SIM card; (500)
means for reading the PIN code from memory to the SIM card if there is a match between the entered signature and the stored reference signature; and
an access means for confirming the access, if there is a match, and for denying the access, if there is a mismatch.

5. The apparatus according to claim 4, wherein said conversion means includes a touch screen.

6. The apparatus according to claim 5, wherein said touch screen has a plurality of fields (SQ1-SQ4) each being associated with a part of the signature.

7. The apparatus according to claim 6, wherein the fields are automatically generatable, after the signature has been entered.

8. The apparatus according to one of claims 6 or 7, further comprising:
a conversion means for converting each matched field to a respective digit of a PIN code; and
an entering means for entering said PIN code to a SIM card.

9. The apparatus according to one of claims 4 to 8, further comprising:
a detecting means for detecting a pressure pattern of the entered signature; and
a comparison means for comparing the detected pressure pattern of the entered signature and a stored reference pressure pattern.

## Patentansprüche

1. Verfahren zum Erlangen von Zugang zu einem digitalen Mobiltelefon, das die folgenden Schritte beinhaltet:
Eingeben einer Signatur (11) in ein Signaturerkennungsmittel mit einer gespeicherten Referenzsignatur;
Vergleichen der eingegebenen Signatur mit der gespeicherten Referenzsignatur (100);
internes Umwandeln, wenn es eine Übereinstimmung zwischen der eingegebenen Signatur und der gespeicherten Referenzsignatur gibt, der eingegebenen Signatur in einen PIN-Code und Senden des PIN-Code zur SIM-Karte;
Vergleichen des PIN-Code mit einem in der SIM-Karte (500) gespeicherten Referenzcode; und
Bestätigen des Zugangs, wenn es eine Übereinstimmung gibt; oder
Verweigern des Zugangs, wenn es keine Übereinstimmung gibt.

2. Verfahren nach Anspruch 1, das ferner die folgenden Schritte beinhaltet:
Erkennen eines Druckmusters der eingegebenen Signatur; und
Vergleichen des erkannten Druckmusters der eingegebenen Signatur mit einem gespeicherten Referenzdruckmuster;
Bestätigen des Zugangs, wenn es eine Übereinstimmung gibt; und
Verweigern des Zugangs, wenn es keine Übereinstimmung gibt.

3. Verfahren nach einem der vorherigen Ansprüche, das die folgenden Schritte beinhaltet:
Durchführen einer PIN-Code-Zugriffsprozedur, wenn die Signaturerkennung und/oder die Umwandlung erfolglos verläuft/verlaufen.

4. Vorrichtung zum Erlangen von Zugang zu einem digitalen Mobiltelefon, die Folgendes umfasst:
ein Signaturerkennungsmittel (100) mit einer gespeicherten Referenzsignatur;
ein Eingabemittel zum Eingeben einer Signatur;
ein Vergleichsmittel (200) zum Vergleichen der eingegebenen Signatur mit der gespeicherten Referenzsignatur; wobei die eingegebene Signatur intern in einen PIN-Code umgewandelt und der PIN-Code zur SIM-Karte gesendet wird;
Mittel zum Vergleichen des PIN-Code mit einem auf einer SIM-Karte gespeicherten Referenzcode; (500)
Mittel zum Einlesen des PIN-Code aus dem Speicher auf die SIM-Karte, wenn es eine Übereinstimmung zwischen der eingegebenen Signatur und der gespeicherten Referenzsignatur gibt; und
ein Zugangsmittel zum Bestätigen des Zugangs, wenn es eine Übereinstimmung gibt, und zum Verweigern des Zugangs, wenn es keine Übereinstimmung gibt.

5. Vorrichtung nach Anspruch 4, wobei das genannte Umwandlungsmittel einen Touchscreen beinhaltet.

6. Vorrichtung nach Anspruch 5, wobei der genannte Touchscreen mehrere Felder (SQ1-SQ4) hat, die jeweils mit einem Teil der Signatur assoziiert sind.

7. Vorrichtung nach Anspruch 6, wobei die Felder automatisch erzeugt werden können, nachdem die Signatur eingegeben wurde.

8. Vorrichtung nach Anspruch 6 oder 7, die ferner Folgendes umfasst:
ein Umwandlungsmittel zum Umwandeln jedes übereinstimmenden Feldes mit einer jeweiligen Stelle eines PIN-Code; und
ein Eingabemittel zum Eingeben des genannten PIN-Code in eine SIM-Karte.

9. Vorrichtung nach einem der Ansprüche 4 bis 8, die ferner Folgendes umfasst:
ein Erkennungsmittel zum Erkennen eines Druckmusters der eingegebenen Signatur; und
ein Vergleichsmittel zum Vergleichen des erkannten Druckmusters der eingegebenen Signatur mit einem gespeicherten Referenzdruckmuster.

## Revendications

1. Un procédé d'obtention d'un accès à un téléphone mobile numérique comprenant les opérations suivantes :
la saisie d'une signature (11) dans un moyen de reconnaissance de signature possédant une signature de référence conservée en mémoire,
la comparaison de la signature saisie et de la signature de référence conservée en mémoire (100),
s'il y a appariement entre la signature saisie et la signature de référence conservée en mémoire, la signature saisie est convertie en interne vers un code PIN et le code PIN est envoyé à la carte SIM,
la comparaison du code PIN à un code de référence conservée en mémoire dans la carte SIM (500), et
s'il y a appariement, la confirmation de l'accès, ou
s'il n'y a pas appariement, le refus de l'accès.

2. Le procédé selon la Revendication 1, comprenant en outre les opérations suivantes :
la détection d'un motif de pression de la signature saisie, et
la comparaison du motif de pression détecté de la signature saisie et d'un motif de pression de référence conservé en mémoire,
s'il y a appariement, la confirmation de l'accès, et
s'il n'y a pas appariement, le refus de l'accès.

3. Le procédé selon l'une quelconque des Revendications précédentes, comprenant les opérations suivantes :
l'exécution d'une procédure d'accès par code PIN si la reconnaissance de signature et/ou la conversion échoue.

4. Un appareil destiné à obtenir un accès à un téléphone mobile numérique comprenant :
un moyen de reconnaissance de signature (100) possédant une signature de référence conservée en mémoire,
un moyen de saisie destiné à la saisie d'une signature,
un moyen de comparaison (200) destiné à la comparaison de la signature saisie et de la signature de référence conservée en mémoire, la signature saisie est convertie en interne vers un code PIN et le code PIN est envoyé à la carte SIM,
un moyen de comparaison du code PIN à un code de référence conservée en mémoire dans une carte SIM, (500)
un moyen de lecture du code PIN à partir de la mémoire vers la carte SIM s'il y a appariement entre la signature saisie et la signature de référence conservée en mémoire, et
un moyen d'accès destiné à la confirmation de l'accès s'il y a appariement et destiné au refus de l'accès s'il n'y a pas appariement.

5. L'appareil selon la Revendication 4, où ledit moyen de conversion comprend un écran tactile.

6. L'appareil selon la Revendication 5, où ledit écran tactile possède une pluralité de champs (SQ1 - SQ4), chaque champ étant associé à une partie de la signature.

7. L'appareil selon la Revendication 6, où les champs peuvent être générés automatiquement après que la signature ait été saisie.

8. L'appareil selon l'une quelconque des Revendications 6 ou 7, comprenant en outre :
un moyen de conversion destiné à convertir chaque champ apparié vers un chiffre respectif d'un code PIN, et
un moyen de saisie destiné à la saisie dudit code PIN dans une carte SIM.

9. L'appareil selon l'une quelconque des Revendications 4 à 8, comprenant en outre :
un moyen de détection destiné à la détection d'un motif de pression de la signature saisie, et
un moyen de comparaison destiné à la comparaison du motif de pression détecté de la signature saisie et d'un motif de pression de référence conservé en mémoire.
